Europäisches Patentamt

European Patent Office

Office européen des brevets

(19)

(11) Publication number: **0 131 634**
**B1**

## (12) EUROPEAN PATENT SPECIFICATION

(45) Date of publication of patent specification: 01.06.88

(51) Int. Cl.⁴: **G 02 B 6/00**

(21) Application number: **83106312.8**

(22) Date of filing: **29.06.83**

(54) **Single-mode W-fibre.**

(43) Date of publication of application:
**23.01.85 Bulletin 85/04**

(45) Publication of the grant of the patent:
**01.06.88 Bulletin 88/22**

(84) Designated Contracting States:
**BE DE FR GB IT NL**

(56) References cited:
**EP-A-0 041 864**
**JP-A-58 104 040**

**ELECTRONICS LETTERS, vol. 18, no. 24, 25
November 1982 L.D. COHEN et al. "Low loss
qudrapole clad single-mode lightguides with
dispersion below 2 ps/km nm over the 1.28
APPLIED OPTICS, vol. 16, no. 8, August 1977,
M.MAEDA et al. "Leaky modes on W-fibers:
mode structure and attenation", page 2198-
2203**

**ELEKTRISCHES NACHRICHTENWESEN, vol.
56, no. 4, 1981 F. AKERS et al. "Optische
Fasertechnik Forschung in den 80er Jahren",
pages 331-337**

(73) Proprietor: **ANT Nachrichtentechnik GmbH
Gerberstrasse 33
D-7150 Backnang (DE)**

(72) Inventor: **Unger, Hans-Georg, Prof. Dr. Ing.
Wöhler Strasse 10
D-3300 Braunschweig (DE)**

(56) References cited:
**IEEE Journal of Quantum Electronics, Vol.
OE17, No. 6, June 1981, pages 858-861, TETSUI
MIYA et al.: "Fabrication of low dispersiom
single-mode fibers over a wide spectral range".**

Courier Press, Leamington Spa, England.

## Description

The invention relates to a single-mode fibre comprising a core, an inner cladding layer disposed around the core and having an index of refraction that is less than the index of refraction of the core, a threshold cladding layer disposed around the inner cladding layer and having an index of refraction that is greater than the index of refraction of the inner cladding layer and an outer cladding layer disposed around the threshold cladding layer and having an index of refraction that is less than the index of refraction of the threshold cladding layer and the index of refraction of the core and greater than the index of refraction of the inner cladding layer.

Such a single-mode fibre with three cladding layers having an above mentioned profile of refractive index is described in JP—A—58 104 040 (to which corresponds EP—A—083843) as well as in IEEE Journal of Quantum Electronics Vol. QE17, No. 6 June 1981, pages 858—861, T. Miya et al.: "Fabrication of low dispersion single-mode fibers over a wide spectral range".

Another single-mode-fiber with four cladding layers having a similar profile of refractive index, whereby the dispersion spectrum of this quadruple-clad lightguide can have three zero-crossings, is described in Electronics Letters, 25th Nov. 1982, Vol. 18, No. 24, pages 1023, 1024, L. G. Cohen et al.: "Low loss quadruple-clad single-mode lightguides with dispersion below 2 ps/km nm over the 1.28 µm—1.65 µm wavelength range".

It is an object of the present invention to provide an improved single-mode fibre having low dispersion over a wide spectral range.

This object can be attained by a single-mode fibre with the features of claim 1. Suitable realisations are recited in the subclaims.

An advantage of the present invention is that a dispersion spectrum with three zero-crossings can be realized by a triple-clad fibre.

In the following, the invention is illustrated by a description, by way of examples, with reference to the accompanying drawings in which:

Fig. 1a) shows a graph of the group-index of the core $(n'_{co})$ and outer cladding $(n'_{cl})$ of a step-index single-clad fiber, the group-index of the additional inner cladding $(n'_w)$ of a double-clad W-fiber, and the group-index of the additional threshold cladding $(n'_t)$ of the triple-clad WT-fiber (a W-fiber with threshold cladding) of the present invention, along with the effective group-indices $N'$, $N'_w$ and $N'_{wt}$ of the step-index fiber, W-fiber and WT-fiber of the present invention respectively,

Figure 1b) shows a graph illustrating the variation, as a function of the wavelength, of the dispersion of the fundamental mode of the WT-fiber of the present invention,

Figure 2 illustrates the index-profile of the WT-fiber of the present invention, and

Figure 3 shows a graph of the dispersion spectra $D(\lambda)$ of WT-fibers 1 to 6 identified in the Table.

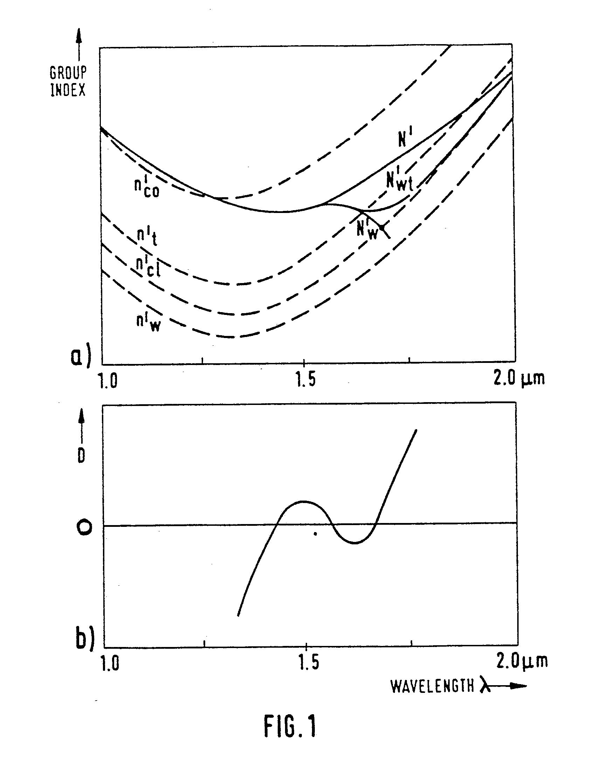

Optical signals in single-mode fibres suffer distortion due to the fundamental mode group delay $t_g$ changing with wavelength $\lambda$. Fig. 1a) shows how the effective group-index of the fundamental mode $N'=ct_g/L$ depends qualitatively on wavelength. Here c is the vacuum velocity of light and L the length of the fibre. The dotted curves designated by $n'_{co}$ and $n'_{cl}$ represent the group-index of the core and the cladding material respectively of the fibre and are related to their respective refractive indices $n_{co}$ and $n_{cl}$ by

$$n'=n-\frac{dn}{d\lambda} \qquad (1)$$

At short wavelengths corresponding to values of the fibre parameter

$$V=(2\pi a/\lambda)\sqrt{n_{co}^2-n_{cl}^2}$$

larger than 3, (with a as the core radius), the fundamental mode fields are well concentrated within the core so that this mode propagates nearly with the group-index of the core material. With increasing wavelength the fields extend ever wider into the cladding so that eventually the fundamental mode propagates with the group-index of the cladding. The group-index of fused silica has a minimum near $\lambda=1.28$ µm. Doping fused silica with germanium or phosphor to raise its refractive index in the fibre core or with fluorine to lower its refractive index in the cladding shifts this minimum only slightly. The effective group-index of the fundamental mode in making its transition from the core group-index to the cladding group-index with increasing wavelength will likewise pass at least one minimum, where to first order its delay becomes independent of wavelength and its dispersion minimal. In such a minimum the slope of the delay characteristic vanishes and only its curvature remains to distort signals, yet by orders of magnitude less. For this dispersion minimum to be of any use of signal transmission it must be at a long enough wavelength so that the core guides only the fundamental mode, yet not too long a wavelength, lest the fundamental mode fields extend too far out into the cladding and become too sensitive to fibre bending. The dispersion minimum must for these two reasons occur in the wavelength range where the effective group-index of the fundamental mode transits from the group-index of the core to that of the cladding. Simple step-index fibres as well as gradient-index fibres without any index depression below the cladding index can therefore be designed to have one dispersion minimum in the useful single-mode range, but only at wavelengths somewhat longer than that of the material dispersion minimum at $\lambda \approx 1.28$ $\mu$m.

If the fibre has a W-index profile with an annular cross-sectional intermediate region of depressed index $n_w$ surrounding the core, the group-index of the fundamental mode in making its transition with increasing wavelength from the group-index of the core to that of the cladding will be affected by the lower index $n_w$ of the intermediate region and tend to approach its group-index $n_w'$. In a suitably designed W-fibre the effective group-index of the fundamental mode will therefore with increasing wavelength first pass a minimum and, after increasing somewhat, pass a maximum and turn down again, as it is shown in Fig. 1a) by the line designated with $N_w'$. When $N_w'$ approaches $n_{cl}'$, or even crosses it, the fundamental mode fields will extend far out into the cladding and became very sensitive to fibre bending, or the fundamental mode will even be cutoff. Such a W-fibre can therefore hardly be operated at wavelengths much beyond the maximum of $N_w'$.

Aim of this invention is a new W-fibre with little dispersion over a wide spectral range.

This can be solved by a design dimension as taught by the claims.

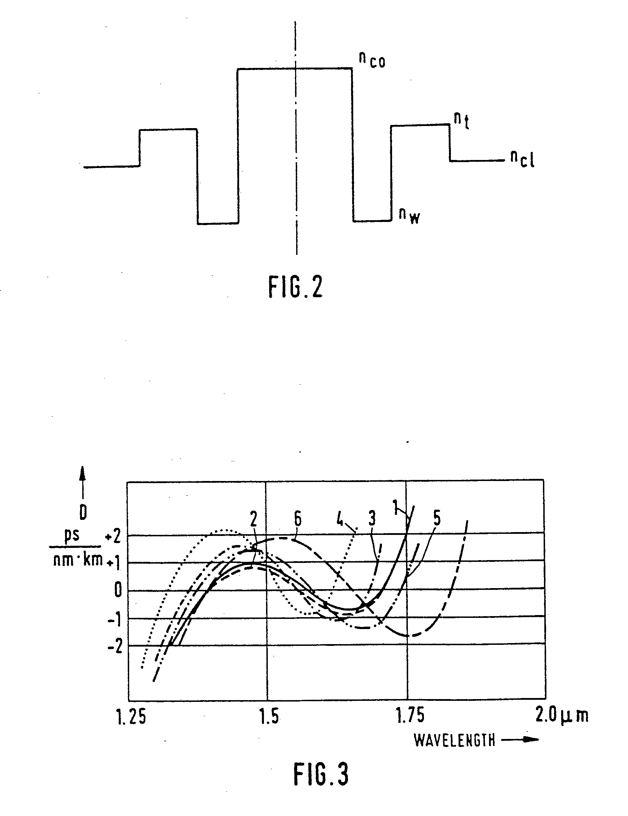

To further improve the dispersion characteristic of the fundamental mode of the classical W-fibre said classical W-fibre is modified as in Fig. 2 by interposing an additional layer (hereinafter referred to as threshold layer) of refractive index $n_t > n_{cl}$ between the inner cladding of depressed index $n_w$ and the outer cladding of index $n_{cl}$. This threshold layer confines the fundamental mode fields before they extend too far out into the cladding, and it also shifts the fundamental mode cutoff to longer wavelengths or eliminates it altogether. In doing this it prevents the effective group-index $N_{wt}'$ of the fundamental mode to turn down too much beyond its maximum, and it can even make it to turn up again and gradually approach the effective group-index $n_{cl}'$ of the outer cladding. While the depressed index $n_w$ of the inner cladding causes the intermediate maximum of the effective group-index, the threshold cladding causes its second minimum. In between the two minima and somewhat beyond, the fundamental mode will have a wide spectral range of low dispersion.

Responsible for pulse broadening is, to first order, the derivative of the group delay with respect to optical frequency or wavelength

$$D = \frac{1}{c} \frac{dN'}{d\lambda} \qquad (2)$$

Fig. 1b) shows this dispersion coefficient $D(\lambda)$ of the fundamental mode in a suitably designed WT-fibre, i.e. a W-fibre with a threshold cladding. It crosses zero where the effective group-index $N_{wt}$ has an extremum and should preferably have the same absolute value at its minimum as at its maximum. The limit of the single-mode range where the next higher order mode is cutoff should be sufficiently below the lower wavelength limit of the low-dispersion spectral range, while at the upper wavelength limit of this low-dispersion spectral range the fundamental mode fields should be sufficiently well confined for the fibre to remain insensitive to bending. Also the low-dispersion range should extend as far as possible over that part of the low-loss range of fused silica fibres over which efficient InGaAsP-lasers and detectors operate.

This design of the WT-fibre according to the invention requires the effective index $N_{wt} = \beta_{wt}/k$ of its fundamental mode as well as its first and second derivative with respect to wavelength to be determined very accurately. The residual dispersion can be so small over an extended spectral range that only a very accurate solution of the boundary value problem will give reliable results.

We have therefore based the analysis on the so-called vectorwave solution, for which in each homogeneous layer of the multilayered structure the general solution of Maxwell's equation of a particular circumferential order is set up in terms of fundamental systems of cylinder functions. From this those components of the electromagnetic field are derived which are tangential to the boundaries between layers. These fields are then matched at boundaries between adjacent layers. This procedure yields the exact characteristic equation for the fibre model of Fig. 2, with uniform layers.

In solving this characteristic equation numerically to obtain the effective index of the fundamental mode as a function of wavelength, we have approximated the refractive indices of the different layers in their wavelength dependencies by three-term Sellmeier equations with their respective coefficients determined from the data given by Kobayashi et al. Refractive-index dispersion of doped fused silica, Proc. IOOC 1977, Tokyo, pages 309—312. The outermost cladding is taken to be pure fused silica, with respect to which the indices of core and threshold layer are assumed to be raised by adding germanium and the inner cladding depressed by adding fluorine. Since the regular CVD-fabrication of fibre preforms allows only a limited fluorine concentration and since too much Ge-doping tends to increase fibre losses, both the index depression by fluorine doping and the index increase by Ge were assumed to be limited to 0.4%. To determined the group-index $N_{wt}'$ of the fundamental mode from its effective index $N_{wt}$ equation (1) was found to be most suitable.

A number of WT-fibre designs, which were calculated within these bounds and according to the general specifications for widerange low dispersion, are listed in the Table shown at the end of the description. Their dispersion coefficients D are plotted in Figs. 3 and 4. Fibres 1 and 2 differ only by 0.2 $\mu$m in the outer diameter of their threshold cladding. They have less than 1 ps (nm · km) dispersion between

3

$\lambda=1.36$ μm and 1.73 μm. It has been difficult to find a WT-fibre design with similarly low dispersion over the same relative spectral range at shorter wavelength. Fibre 3 with only 0.2% core index difference with respect to the outer cladding achieves less than 1.6 ps/(nm · km) dispersion in between $\lambda=1.32$ μm and 1.7 μm. Dispersion below 2.2 ps/(nm · km) between $\lambda=1.28$ μm and 1.65 μm is achieved with fibre 4 by lowering the core index difference even further to 0.15%. However to extend such a low dispersion characteristic to even shorter wavelengths does not seem possible with a WT-fibre, at least not when the index depression by fluorine doping is limited to 0.4%. The minimum of material dispersion is apparently also the lower limit for a wide band of low fundamental-mode dispersion. On the other hand, though, the WT-fibre may be designed to have an even wider spectral range of low dispersion at longer wavelengths. As an example Fibre 6 has less than 1.8 ps/(nm · km) dispersion from $\lambda=1.35$ μm to 1.8 μm.

A fibre according to the invention can be easily fabricated for there exists only one relative minimum of refractive-index.

TABLE

| Design No. | Core diam. μm | Core index diff. % | Inner cladding diam. μm | Inner cladding index diff. % | Threshold cladding diam. μm | Threshold cladding index diff. % | Max. dispersion ps / nm km | Wavelength range $\lambda_{min}$ μm | $\lambda_{max}$ μm |
|---|---|---|---|---|---|---|---|---|---|
| 1 | 8.2 | 0.3 | 13 | −0.4 | 22.2 | 0.075 | 1 | 1.36 | 1.73 |
| 2 | 8.2 | 0.3 | 13 | −0.4 | 22.4 | 0.075 | 1 | 1.36 | 1.73 |
| 3 | 10 | 0.2 | 15.2 | −0.4 | 22 | 0.1 | 1.6 | 1.32 | 1.70 |
| 4 | 11.8 | 0.15 | 17.2 | −0.4 | 27.5 | 0.07 | 2.3 | 1.28 | 1.66 |
| 5 | 8.2 | 0.3 | 13 | −0.4 | 23 | 0.065 | 1.4 | 1.34 | 1.76 |
| 6 | 8 | 0.3 | 12.2 | −0.4 | 18 | 0.05 | 1.9 | 1.35 | 1.8 |
|  |  |  |  |  |  |  | 0.06 | 1.52 | 1.64 |

WT-Fibres with wide-band low dispersion

**Claims**

1. A single-mode fibre comprising a core, an inner cladding layer disposed around the core and having an index of refraction ($n_w$) that is less than the index of refraction ($n_{co}$) of the core, a threshold cladding layer disposed around the inner cladding layer and having an index of refraction ($n_t$) that is greater than the index of refraction ($n_w$) of the inner cladding layer and an outer cladding layer disposed around the threshold cladding layer and having an index of refraction ($n_{cl}$) that is less than the index of refraction ($n_t$) of the threshold cladding layer and the index of refraction ($n_{co}$) of the core and greater than the index of refraction ($n_w$) of the inner cladding layer, characterized in that the ratio of the outer diameter of the threshold cladding layer to the inner diameter thereof as well as the ratio of the inner diameter of the threshold cladding layer to the core diameter range from 1.4 to 1.8, in that the index of refraction ($n_t$) of the threshold cladding layer ranges from about 0.05% to about 0.15% greater than the index of refraction ($n_{cl}$) of the outer cladding layer, and in that the values of the diameters as well as those of the indices of refraction of the core and the cladding layers are furthermore so selected with respect to one another within said ranges that the curve ($D(\lambda)$) representing the variations of the dispersion coefficient (D) as a function of the wavelength ($\lambda$) used has three zero-crossings.

2. A single-mode fibre according to claim 1, characterized in that the dispersion coefficient ($D(\lambda)$) presents respectively, between the three zero-crossings, a relative maximum and a relative minimum which have substantially the same absolute values.

3. A single-mode fibre according to claim 1 or 2, characterized in that the index of refraction ($n_w$) of the inner cladding layer is 4% lower than the index of refraction ($n_{cl}$) of the outer cladding layer, and the index of refraction ($n_{co}$) of the core is from 0.15% to 0.4% greater than the index of refraction ($n_{cl}$) of the outer cladding layer.

**Patentansprüche**

1. Einmoden-Lichtwellenleiter, bestehend aus einem Kern, einer diesen umschließenden inneren Mantelschicht mit einem Brechungsindex ($n_w$), der kleiner ist als der Brechungsindex ($n_{co}$) des Kerns, einer die innere Mantelschicht umschließenden Schwellen-Mantelschicht mit einem Brechungsindex ($n_t$), der größer ist als der Brechungsindex ($n_w$) der inneren Mantelschicht, und einer die Schwellen-Mantelschicht umgebenden äußeren Mantelschicht mit einem Brechungsindex ($n_{cl}$), der kleiner als der Brechungsindex ($n_t$) der Schwellen-Mantelschicht, kleiner als der Brechungsindex ($n_{co}$) des Kerns und größer als der Brechungsindex ($n_w$) der inneren Mantelschicht ist, dadurch gekennzeichnet, daß das Verhältnis des äußeren zum inneren Durchmessers der Schwellen-Mantelschicht sowie das Verhältnis des inneren Durchmessers der Schwellen-Mantelschicht zum Durchmesser des Kerns im Bereich von 1,4 bis 1,8 liegt, daß der Brechungsindex ($n_t$) der Schwellen-Mantelschicht 0,05% bis 0,15% größer ist als der Brechungsindex ($n_{cl}$) der äußeren Mantelschicht und daß die Durchmesser und die Brechungsindices des Kerns und der Mantelschichten innerhalb der angegebenen Bereiche so gewählt sind, daß der die Änderungen des Dispersionskoeffizienten (D) in Abhängigkeit von der Wellenlänge ($\lambda$) wiedergebende Kurvenverlauf ($D(\lambda)$) drei Nullstellen hat.

2. Einmoden-Lichtwellenleiter nach Anspruch 1, dadurch gekennzeichnet, daß der Dispersionskoeffizient ($D(\lambda)$) zwischen den drei Nullstellen ein relatives Maximum und ein relatives Minimum aufweist, die im wesentlichen die gleichen Absolutwerte haben.

3. Einmoden-Lichtwellenleiter nach Anspruch 1 oder 2, dadurch gekennzeichnet, daß der Brechungsindex ($n_w$) der inneren Mantelschicht um 4% kleiner ist als der Brechungsindex ($n_{cl}$) der äußeren Mantelschicht und der Brechungsindex ($n_{co}$) des Kerns um 0,15% bis 0,4% größer ist als der Brechungsindex ($n_{cl}$) der äußeren Mantelschicht.

**Revendications**

1. Fibre unimodale comportant un coeur, une couche formant gaine intérieure, disposée autour du coeur et ayant un indice de réfraction ($n_w$) inférieur à l'indice de réfraction ($n_{co}$) du coeur, une couche formant gaine de seuil disposée autour de la couche formant gaine intérieure et ayant un indice de réfraction ($n_t$) plus grand que celui ($n_w$) de la couche formant gaine intérieure, et une couche formant gaine extérieure disposée autour de la couche formant gaine de seuil et ayant un indice de réfraction ($n_{cl}$) moindre que l'indice de réfraction ($n_t$) de la couche formant gaine de seuil et que l'indice de réfraction ($n_{co}$) du coeur et plus grand que l'indice de réfraction ($n_w$) de la couche formant gaine intérieure, caractérisée en ce que le rapport du diamètre extérieur de la couche formant gaine de seuil au diamètre intérieur de celle-ci, ainsi que le rapport du diamètre intérieur de la couche formant gaine de seuil au diamètre du coeur, est compris entre 1,4 et 1,8, en ce que l'indice de réfraction ($n_t$) de la couche formant gaine de seuil est d'environ 0,05% à environ 0,15% plus grand que l'indice de réfraction ($n_{cl}$) de la couche formant gaine extérieure, et en ce que les valeurs des diamètres, tout aussi bien que celles des indices de réfraction du coeur et des couches formant gaine sont en outre choisies les unes par rapport aux autres à l'intérieur desdites plages de façon que la courbe [$D(\lambda)$] utilisée, représentant les variations du coefficient de dispersion (D) en tant que fonction de la longueur d'onde ($\lambda$), comporte trois passages, par zéro.

2. Fibre unimodale selon revendication 1, caractérisée en ce que le coefficient de dispersion [$D(\lambda)$] présente respectivement, entre les trois passages par zéro, un maximum relatif et un minimum relatif qui ont sensiblement les mêmes valeurs absolues.

3. Fibre unimodale selon revendication 1 ou 2, caractérisée en ce que l'indice de réfraction ($n_w$) de la couche formant gaine intérieure est de 4% inférieur à l'indice de réfraction ($n_{cl}$) de la couche formant gaine extérieure, et l'indice de réfraction ($n_{co}$) du coeur est de 0,15% à 0,4% plus grand que l'indice de réfraction ($n_{cl}$) de la couche formant gaine extérieure.

FIG.1

FIG.2

FIG.3